(19) Europäisches Patentamt
European Patent Office
Office européen des brevets

(11) **EP 2 476 031 B1**

(12) **EUROPÄISCHE PATENTSCHRIFT**

(45) Veröffentlichungstag und Bekanntmachung des Hinweises auf die Patenterteilung:
**23.03.2016  Patentblatt 2016/12**

(21) Anmeldenummer: **10754452.0**

(22) Anmeldetag: **07.09.2010**

(51) Int Cl.:
***G05B 19/418*** *(2006.01)*

(86) Internationale Anmeldenummer:
**PCT/EP2010/063076**

(87) Internationale Veröffentlichungsnummer:
**WO 2011/029806 (17.03.2011 Gazette 2011/11)**

(54) **VERFAHREN ZUM ÜBERWACHEN EINER WALZE IN EINER ANLAGE ZUM WALZEN VON METALL**

METHOD FOR MONITORING A ROLLER IN A SYSTEM FOR ROLLING METAL

PROCÉDÉ POUR SURVEILLER UN CYLINDRE DANS UNE INSTALLATION DE LAMINAGE DE MÉTAUX

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.09.2009   AT 14392009**

(43) Veröffentlichungstag der Anmeldung:
**18.07.2012   Patentblatt 2012/29**

(73) Patentinhaber: **Primetals Technologies Austria GmbH
4031 Linz (AT)**

(72) Erfinder: **EFENDIC, Hajrudin
A-4020 Linz (AT)**

(74) Vertreter: **Metals@Linz
c/o Siemens AG
Postfach 22 16 34
80560 München (DE)**

(56) Entgegenhaltungen:
**EP-A1- 1 273 718        WO-A1-2005/003874
DE-A1-102004 048 649    US-B1- 6 356 857**

**Beschreibung**

Die vorliegende Erfindung betrifft ein Verfahren zum Überwachen einer Walze in einer Anlage zum Walzen von Metall.

Konkret betrifft die Erfindung ein Verfahren zum Überwachen einer Walze in einer Anlage zum Walzen von Metall, aufweisend die Schritte

- Aufnehmen von mindestens zwei Kanälen von Soll-Messdaten im Referenzzustand der Anlage;
- Definieren eines Zielkanals aus den Kanälen der Soll-Messdaten;
- messdatenbasierte Bildung eines Modells für den Zielkanal aus den Soll-Messdaten;
- Aufnehmen von mindestens zwei Kanälen von Ist-Messwerten im laufenden Betriebzustand der Anlage, worunter sich ein Ist-Messwert für den Zielkanal und ein Ist-Messwert für zumindest einen weiteren Kanal befindet;
- Berechnung eines Soll-Werts für den Zielkanal unter Zuhilfenahme des Modells und unter Berücksichtigung des Ist-Messwerts für zumindest einen weiteren Kanals; und
- Ermittlung eines Residuums durch das Vergleichen des Soll-Werts mit dem Ist-Messwert für den Zielkanal.

Rechnergestützte Verfahren zur Überwachung einer Anlage sind dem Fachmann unter den Begriffen Fault Diagnosis oder Fault Detection (nachfolgend kurz FD) bekannt, siehe z.B. WO 02/086726 A1. Diese Verfahren zur Detektion von Fehlzuständen in Anlagen beinhalten folgende Verfahrensschritte:

a) Messdatenerfassung von mindestens zwei Kanälen von Soll-Messdaten im Referenzzustand einer Anlage,
b) Definition eines Zielkanals aus den erfassten Kanälen der Soll-Messdaten,
c) messdatenbasierte Bildung eines Modells für den Zielkanal,
d) Verwendung aktuell ermittelter Messwerte und des gebildeten Modells zur Berechnung eines Soll-Werts für den Zielkanal,
e) Dete-ktion von Fehlzuständen durch das Vergleichen zwischen dem aktuellen Messwert und dem Soll-Wert des Zielkanals.

Bei der Zustandsüberwachung, engl. *Condition monitoring,* einer Anlage werden mehrere Messsensoren durch ein Messdatenerfassungssystem erfasst und bei einer - sich beispielsweise aus einer Abnützung einer Komponente ergebenden - Veränderung des Anlagenverhaltens wird selbsttätig eine Warnung oder Fehlermeldung generiert. Zuerst werden Messdaten für den Referenzzustand der Anlage (die sog. Soll-Messdaten) die von einem oder mehreren Sensoren stammen meist in digitaler Form von einem Messdatenerfassungssystem aufgenommen (Schritt a). Unter einem Kanal von Messdaten versteht man eine Aneinanderreihung von Messwerten, die von einem Sensor stammen und einer Zustandsgröße zugeordnet sind; unter einem Zielkanal versteht man einen Kanal der aufgenommenen Messdaten, welcher relevante Informationen über das Verhalten der Anlage enthält bzw. enthalten kann. In der einfachsten Form der FD wird nach der Definition eines Zielkanals (Schritt b), ein, auf einen oder mehreren (ausgenommen der Zielkanal) Kanälen von Soll-Messdaten der Anlage basierendes, Modell für den Zielkanal erstellt (Schritt c). Mittels dieses Modells und in Abhängigkeit von aktuellen Messwerten wird ein Soll-Wert für den Zielkanal durch einen Prozessrechner berechnet (Schritt d) und mit dem aktuellen Messwert des Zielkanals verglichen, wobei ein sogenanntes Residuum, d.h. die Abweichung des Soll-Werts vom aktuellen Messwert, berechnet wird. Überschreitet das Residuum einen Schwellwert, so wird eine Fehlermeldung generiert (Schritt e). Konkrete Anweisungen wie die Zustandsüberwachung einer Walze zum Walzen von Metall durchgeführt werden kann, können dem Stand der Technik nicht entnommen werden.

WO2005/003874 beschreibt ein Verfahren zur Überwachung von rotierenden Anlagen

Moderne Anlagen zum Walzen von Metall, beispielsweise ein Walzgerüst oder ein aus mehreren gekoppelten Walzgerüsten bestehendes Walzwerk, sind hochkomplexe technische Systeme.

Dabei weist jedes Walzgerüst je nach Aufbau (z.B. Duo, Trio, Quarto, Quinto oder Sexto, vgl. Kapitel 2.6 Walzgerüste in Werner Schwenzfeier: Walzwerktechnik, Springer Verlag, 1979) mindestens zwei Arbeits- und gegebenenfalls mehrere Zwischen- und Stützwalzen auf. Im Walzgerüst wird ein Walzgut (z.B. in flacher, runder oder profilartiger Form) aus Metall (beispielsweise Eisen-, Stahl- oder Aluminiumwerkstoffe) durch das Walzen (eine plastische Formänderung des Metalls durch das Aufbringen einer Walzkraft in einem Walzspalt) in einem heißen oder kalten Zustand verformt, wobei das Walzgut unidirektional oder bidirektional (d.h. in reversierendem Betrieb) durch das Walzgerüst bewegt wird. Obwohl sich die Walzwerkstechnik als auch die Technologie der Walzen in den letzten Jahrzehnten rasant weiterentwickelt hat, wird die Leistungsfähigkeit eines Walzgerüsts durch die Walzen (sowohl Arbeits-, Zwischen- und Stützwalzen) begrenzt. Da jede Walze der Anlage zum Walzen von Metall einem Verschleiß unterworfen ist, ist es notwendig, den Zustand der Walze in regelmäßigen Zeitabständen wiederherzustellen (z.B. durch Walzentausch oder durch das sog. Dressieren der Walzen).

Nach dem Stand der Technik sind folgende Strategien für den Walzenwechsel bekannt:

- Walzenwechsel nach einer bestimmten Walzdauer, wobei die Walzdauer jene Zeitspanne angibt, während der die Walze in Betrieb war;
- Walzenwechsel nach einer bestimmten Walzstrecke, wobei die Walzstrecke jene Strecke angibt, die die Walzen im Betrieb zurückgelegt hat;
- Walzenwechsel nach einer Inspektion eines Schadens an der Walze oder einer Verschlechterung der Produktqualität des Walzguts.

Nachteilig an den ersten beiden Strategien ist, dass die Walzdauer bzw. die Walzstrecke so festgelegt werden muss, dass bis zum Walzenwechsel keine, oder zumindest mit einer hohen Wahrscheinlichkeit keine, Schäden an der Walze oder eine Verschlechterung der Produktqualität des Walzguts auftritt. Somit muss die Walze vorzeitig (d.h. vor dem Erreichen der Lebensdauer) gewechselt werden, was die Wirtschaftlichkeit negativ beeinflusst. Nachteilig an der dritten Strategie ist, dass die Beurteilung eines Schadens an der Walze nicht während des Betriebs erfolgen kann, dass die Beurteilung des Schadens eine hohe Fachkenntnis des Bedienpersonals voraussetzt, dass die Lebensdauer der Walze zum Zeitpunkt des Walzenwechsels bzw. der Wiederherstellung bereits abgelaufen ist und somit bereits Walzgut mit schlechterer Qualität produziert worden ist.

Aufgabe der Erfindung ist es, ein Verfahren zur Überwachung einer Walze in einer Anlage zum Walzen von Metall anzugeben, womit ein optimierter Zeitpunkt für den Wechsel bzw. die Wiederherstellung der Walze bestimmt werden kann, sodass zum Einen die Standzeit einer Walze mit geringer Abnutzung verlängert werden kann und zum Anderen, ein rascher Austausch einer Walze mit starker Abnutzung oder Beschädigung initiiert werden kann.

Eine weitere Aufgabe der Erfindung besteht darin, die Überwachung einer Walze auch während des Betriebs zu ermöglichen, d.h. dass dafür der Walzbetrieb nicht gestoppt werden muss.

Eine weitere Aufgabe der Erfindung besteht darin, dass die Überwachung einer Walze auch von einem Bedienpersonal mit geringer Fachkenntnis durchgeführt werden kann.

Diese Aufgabe wird durch ein Verfahren der eingangs genannten Art gelöst, aufweisend die Schritte

- Aufnehmen von mindestens zwei Kanälen von Soll-Messdaten im Referenzzustand der Anlage;
- Definieren eines Zielkanals aus den Kanälen der Soll-Messdaten;
- Vorbehandlung der Soll-Messdaten;
- messdatenbasierte Bildung eines Modells für den Zielkanal aus den vorbehandelten Soll-Messdaten;
- Aufnehmen von mindestens zwei Kanälen von Ist-Messwerten im laufenden Betriebszustand der Anlage, worunter sich ein Ist-Messwert für den Zielkanal und ein Ist-Messwert für zumindest einen weiteren Kanal befindet;
- Berechnung eines Soll-Werts für den Zielkanal unter Zuhilfenahme des Modells und unter Berücksichtigung des Ist-Messwerts für zumindest einen weiteren Kanal;
- Ermittlung eines Residuums durch das Vergleichen des Soll-Werts mit dem Ist-Messwert für den Zielkanal;
- Entscheiden über eine Wiederherstellung oder einen Tausch der Walze durch ein Vergleichen der Größe des Residuums mit einem Schrankenwert.

Dabei werden in einer Offline Phase mindestens zwei Kanäle von Soll-Messdaten im Referenzzustand (beispielsweise nach einer Instandsetzung der Walzen) der Anlage zum Walzen von Metall, entweder in Echtzeit oder mit hoher Abtastfrequenz (z.B. 1 kHz), aufgenommen. Bei der Definition eines Zielkanals wird aus den aufgenommenen Kanälen ein Zielkanal ausgewählt, der der Überwachung zugrundegelegt wird. Die Soll-Messdaten werden anschließend einer Vorbehandlung unterzogen, mit dem Ziel, die Datenmenge, d.h. die Anzahl der Kanäle und deren Abtastfrequenz, bei nicht signifikant niedrigerem Informationsgehalt zu reduzieren. Aus den vorbehandelten Soll-Messdaten wird ein messdatenbasiertes Modell für den Zielkanal generiert, welches in der Online Phase der Berechnung eines Soll-Werts und eines Residuums zugrundegelegt wird. Die messdatenbasierte Modellbildung ist dem Fachmann bekannt, insbesondere wenn es sich beim zu bildenden Modell um ein lineares Modell, ein PCR (engl Principal Component Regression) Modell, ein Modell mit Neuronalen Netzen oder ein KNN (engl. K nearest neighbor) Modell handelt (vgl. H. Efendic et al.: "Iterative Multi-Step Diagnosis Process for Engine Systems", SAE world congress 2005, April 11-14, 2005. Detroit, USA. Paper number: 2005-01-1055). Es ist prinzipiell möglich, dass die Offline und eine darauf folgende Online Phase auf unterschiedlichen Rechnern, zu verschiedenen Zeiten und gegebenenfalls auch auf unterschiedlichen Anlagen durchgeführt werden. In diesem Fall wird der Online Phase lediglich das in der Offline Phase gebildete Modell zur Verfügung gestellt.

In der Online Phase werden, vorzugsweise ständig und in Echtzeit, mindestens zwei Ist-Messwerte im laufenden Betrieb der Anlage aufgenommen, worunter sich ein Ist-Messwert für den Zielkanal und ein Ist-Messwert für zumindest einen weiteren Kanal befinden. Unter Zuhilfenahme des Modells und unter Berücksichtigung des Ist-Messwerts für einen weiteren Kanal wird ein Soll-Wert für den Zielkanal berechnet, der für die anschließende Berechnung eines Residuums verwendet wird. Überschreitet ein Residuum einen Schwellwert, so wird eine Entscheidung über einen Tausch oder eine Wiederherstellung der Walze getroffen und an das Bedienpersonal, z.B. in Form einer Warnung oder eines Alarms, kommuniziert. Andernfalls wird die Online Phase mit neuen Ist-Messwerten wiederholt, sodass der Zustand der Walzen ständig überwacht wird.

Durch das erfindungsgemäße Verfahren wird automatisch ein optimierter Zeitpunkt für den Walzenwechsel bzw. die Wiederherstellung der Walze bestimmt, sodass die Lebensdauer der Walze optimal ausgenützt werden kann und zum Anderen ein Walzgut mit gleichbleibend hoher Qualität erzeugt werden kann. Ein weiterer Vorteil besteht darin, dass die Überwachung der Walze während des Betriebs der Anlage erfolgt (kein Abschalten der Anlage erforderlich) und dass keinerlei spezielle Fachkenntnisse des Bedienpersonals für die Überwachung erforderlich sind.

In einer vorteilhaften Ausführungsform werden nach dem Aufnehmen von mindestens zwei Kanälen die Soll-Messdaten abgespeichert. Dadurch ist es möglich, die Messdatenerfassung von den nachfolgenden Schritten räumlich und zeitlich zu trennen, sodass z.B. die Messdatenerfassung vom Automatisierungssystem der Anlage zum Walzen von Metall und die nachfolgenden Schritte in der Offline Phase von einem PC bzw. einer Workstation erledigt werden.

Bei einer vorteilhaften Ausführungsform wird als Zielkanal die Walzkraft der Walze oder eine damit in Verbindung stehende Größe (z.B. ein Kammerdruck bzw. die Kammerdrücke in einem die Walzkraft bewirkenden, als Hydraulikzylinder ausgeführten, Anstellzylinder) verwendet. Die Verwendung der Walzkraft bringt Vorteile, da die Abnützung der Walze anhand dieser Größe gut zu erkennen ist.

In einer dazu alternativen, vorteilhaften Ausführungsform wird als Zielkanal die Winkelgeschwindigkeit der Walze oder eine damit in Verbindung stehende Größe (z.B. die Drehzahl, die Frequenz...) verwendet. Die Verwendung der Winkelgeschwindigkeit bringt Vorteile, da die Abnützung der Walze anhand dieser Größe gut zu erkennen ist.

In einer weiteren Ausführungsform werden die Soll-Messdaten vor der messdatenbasierten Bildung eines Modells einer Strukturanalyse unterzogen. Durch die Strukturanalyse, z.B. nach der Methode einer engl. *Step forward selection linear (SFS),* einer engl. *Backward selection combined with SFS linear (BSFS),* einer engl. *SFS with orthogonal projected variables in each Step (LinOrth)* oder einer engl. *SFS with orthogonal projected variables in each Step using polynomial independent variables (PolyOrth),* wird die Bildung eines optimierten Modells ermöglicht. Details zur Strukturanalyse sind z.B. bekannt aus der Veröffentlichung

A. Schrems et al.: "Data based multivariate pseudo correlation analysis in steel industry for optimized variable selection", in Proceedings of the 17th World Congress of the International Federation of Automatic Control, Seoul, Korea, July 6-11, 2008.

In einer weiteren vorteilhaften Ausführungsform werden die Soll-Messdaten bei der Vorbehandlung der Messdaten den Schritten

- Detektion und Eliminierung von "Null-Kanälen";
- Detektion und Eliminierung von Ausreißern;
- Filterung;
- Downsampling

unterzogen. Dadurch wird die Datenmenge (die Anzahl der Kanäle und deren Abstastfrequenz) der Soll-Messdaten reduziert, wobei jedoch deren Informationsgehalt beinahe konstant bleibt. Durch diesen Schritt wird die Bildung eines kompakten, einen geringen Rechenaufwand bei der Berechnung eines Soll-Werts erfordernden, Modells ermöglicht. Unter einem sogenannten "Null-Kanal" versteht man einen Kanal, bei dem sämtliche Messwerte, d.h. bei allen Abtastzeitpunkten, konstant 0 sind.

In einer weiteren Ausführungsform werden die Soll-Messdaten nach dem Downsampling einer Detektion und Eliminierung von stationären Bereichen unterzogen. Dadurch werden transiente Vorgänge aus den Soll-Messdaten entfernt, was sich wiederum günstig auf deren Datenmenge auswirkt.

In einer weiteren vorteilhaften Ausführungsform werden je Zielkanal mehrere messdatenbasierte Modelle gebildet. Dadurch ist es möglich, der Überwachung mehrere Modelle zugrunde zu legen und somit die Qualität der Überwachung zu erhöhen.

In einer weiteren vorteilhaften Ausführungsform wird das Residuum vor der Entscheidung über die Wiederherstellung oder den Tausch der Walze einer Nachbehandlung des Residuums mit wenigstens einem der Schritte

- Filterung;
- Detektion und Eliminierung von Ausreißern;
- Berechnung statistischer Kenngrößen des Residuums unterzogen, wobei der Entscheidung über eine Wiederherstellung oder einen Tausch der Walze das nachbehandelte Residuum zugrundegelegt. Durch diese Maßnahme wird die Zuverlässigkeit der Überwachung der Walze erhöht.

In einer Ausführungsform wird als statistische Kenngröße entweder der Mittelwert, der Median, die Standard-

4

abweichung oder die Varianz berechnet. Natürlich sind aber auch andere statistische Kenngrößen, wie z.B. einer weitergehenden Analyse der Standardabweichung (engl. *Analysis of standard deviation ANOVA*), einer Bestimmung der Konfidenzintervalle und der Konfidenzbereiche (engl. *Determination of confidence intervals and confidence limits)* oder an sich bekannte Methoden der Zeitbereichsanalyse (wie z.B. der Fourier Transformation FT, der *Fast Fourier Trans formation FFT* oder der *Discrete Fourier Transformation DFT;* die Anwendung einer Spektralanalyse bei der Zustandsüberwachung ist auch aus WO 2008 071552 A1 bekannt) möglich.

In einer Ausführungsform ist der Schrankenwert entweder fix oder dynamisch veränderlich, wobei ein dynamisch veränderlicher Schrankenwert gegenüber einem fixen Schrankenwert den Vorteil aufweist, dass Charakteristika des Modells (beispielsweise ein Qualitätsparameter oder ein Empfindlichkeitsmaß), die Ist-Messdaten und statistische Kenngrößen des Residuums bei der Bestimmung des Schrankenwerts mit berücksichtigt werden können.

Eine sehr umfassende Überwachung der Anlage ist möglich,

- wenn mehrere Zielkanäle aus den Kanälen der Soll-Messdaten definiert werden;
- wenn je Zielkanal eine messdatenbasierte Bildung eines Modells für den Zielkanal aus den vorbehandelten Soll-Messdaten erfolgt;
- wenn je Zielkanal eine Berechnung eines Soll-Werts für den Zielkanal unter Zuhilfenahme des Modells für den Zielkanal und unter Berücksichtigung des Ist-Messwerts für zumindest einen weiteren Kanal erfolgt;
- wenn je Zielkanal eine Ermittlung eines Residuums durch das Vergleichen des Soll-Werts mit dem Ist-Messwert für den Zielkanal erfolgt; und
- wenn zumindest der Vergleich eines Residuums mit einem Schrankenwert der Entscheidung über eine Wiederherstellung oder einen Tausch der Walze zugrundegelegt wird.

In einer weiteren Ausführungsform werden die Residuen vor der Entscheidung über eine Wiederherstellung oder einen Tausch der Walze gewichtet. Dieser Schritt ist dann vorteilhaft, wenn verschiedene Kriterien für den Verschleiß anhand der Residuen unterschiedliche Priorität aufweisen.

Es hat sich als vorteilhaft herausgestellt, das erfindungsgemäße Verfahren zur Überwachung einer Arbeits-, Zwischen- oder Stützwalze eines Walzgerüsts zum Kalt- oder Warmwalzen von Eisen-, Stahl- oder Aluminiumwerkstoffen anzuwenden.

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:

Fig. 1 ein Flussdiagramm mit Verfahrensschritten zur Überwachung einer Walze eines Walzgerüsts
Fig. 2 eine schematische Darstellung eines Walzgerüsts
Fig. 3 eine Darstellung des Ablaufs einer Online Phase
Fig. 4 ein Ablaufdiagramm mit dem Zusammenhang zwischen einer Online und einer Offline Phase
Fig. 5 ein Flussdiagramm mit Verfahrensschritten zur Überwachung einer Walze mit zwei Zielkanälen
Fig. 6 eine zeitliche Darstellung eines Residuums mit zwei unterschiedlichen Schwellwerten
Fig. 7 eine Darstellung

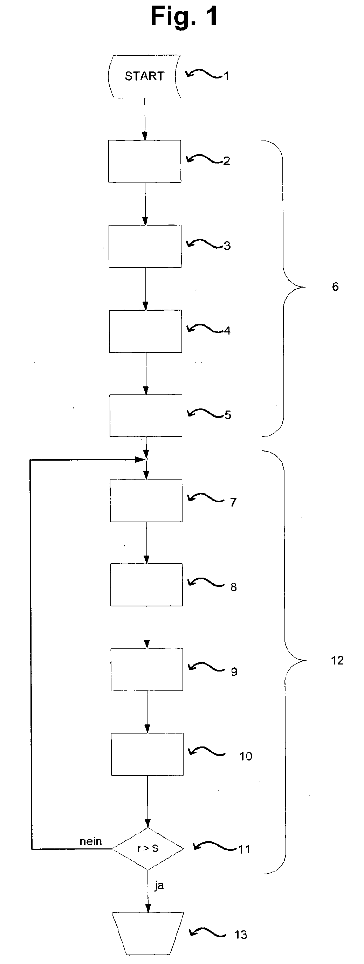

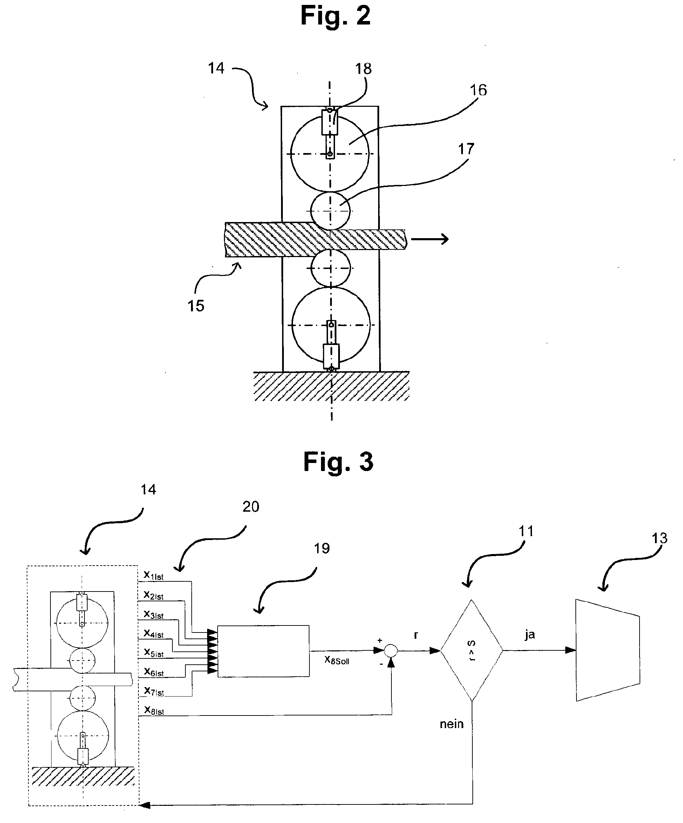

In Fig. 1 ist ein Flussdiagramm mit Verfahrensschritten zum Überwachen einer unteren Arbeitswalze in einer als Quarto-Walzgerüst ausgeführten Anlage zum Walzen von Stahl dargestellt, wobei auf den in Fig. 2 dargestellten Aufbau des Walzgerüsts Bezug genommen wird. Nach dem Wiederherstellen bzw. Tausch der Walze und dem Beginn des Walzvorgangs des Bandes 15 wird das erfindungsgemäße Verfahren gestartet (Schritt 1) und es werden 8 Kanäle von Soll-Messdaten im laufenden Betrieb des Walzgerüsts 14 mit einer Abtastzeit von 1 ms über eine Dauer von 10 min von einem Messdatenerfassungssystem aufgenommen (Schritt 2). Jeder Kanal der Soll-Messdaten stammt von einem Sensor der mit einer Zustandsgröße des Walzgerüsts 14 in Verbindung steht, wobei jeweils zwei Sensoren als Drucksensoren im einem oberen und in einem unteren, als Hydraulikzylinder ausgeführten Anstellzylinder 18 integriert sind, je ein Drehzahlsensor mit einer oberen und einer unteren Stützwalze 16 und je ein Drehzahlsensor mit einer oberen und einer unteren Arbeitswalze 17 verbunden ist.

Die Soll-Messdaten $MD_{Soll}$ weisen folgende Struktur auf

$$MD_{Soll} = \begin{bmatrix} x_{1,1} & x_{1,2} & \cdots & x_{1,7} & x_{1,8} \\ x_{2,1} & x_{2,2} & \cdots & x_{2,7} & x_{2,8} \\ \vdots & \vdots & \ddots & \vdots & \vdots \\ \vdots & \vdots & \cdots & \vdots & \vdots \\ x_{4800000,1} & x_{4800000,2} & \cdots & x_{4800000,7} & x_{4800000,8} \end{bmatrix},$$

wobei die Kanäle den Spalten der Matrix entsprechen:

| Spalte 1 | Kanal x1 | Kammerdruck 1 vom oberen Anstellzylinder |
|---|---|---|
| Spalte 2 | Kanal x2 | Kammerdruck 2 vom oberen Anstellzylinder |
| Spalte 3 | Kanal x3 | Kammerdruck 1 vom unteren Anstellzylinder |
| Spalte 4 | Kanal x4 | Kammerdruck 2 vom unteren Anstellzylinder |
| Spalte 5 | Kanal x5 | Winkelgeschwindigkeit der oberen Stützwalze |
| Spalte 6 | Kanal x6 | Winkelgeschwindigkeit der unteren Stützwalze |
| Spalte 7 | Kanal x7 | Winkelgeschwindigkeit der oberen Arbeitswalze |
| Spalte 8 | Kanal x8 | Winkelgeschwindigkeit der unteren Arbeitswalze |

Anschließend erfolgt die Definition eines Zielkanals (Schritt 3) aus den acht Kanälen der Soll-Messdaten, wobei als Zielkanal die Winkelgeschwindigkeit der unteren Arbeitswalze (d.h. Kanal 8) ausgewählt wird.

In Schritt 4 werden die Soll-Messdaten (Datenmenge 4.8 Millionen Einzelwerte, d.h. 8 Kanäle mal 1000 Messwerten pro Sekunde mal 600 Sekunden) einer automatischen Vorbehandlung, bestehend aus den Schritten

- Detektion und Eliminierung von "Null-Kanälen";
- Detektion und Eliminierung von Ausreißern;
- Filterung;
- Downsampling;
- Detektion und Eliminierung von stationären Bereichen;

unterzogen. Bezüglich der Details zur Vorbehandlung wird auf die unveröffentlichte Anmeldung PCT/EP2009/058406 verwiesen, deren Inhalt hiermit per Referenz miteinbezogen wird. Durch die Vorbehandlung der Messdaten wurde die Datenmenge auf 46400 Einzelwerte (8 Kanäle mal 10 Messwerten pro Sekunde mal 580 Sekunden) reduziert. Somit weisen die Soll-Messdaten nach der Vorehandlung $MD^{*}_{Soll}$ folgende Struktur auf

$$MD^{*}_{Soll} = \begin{bmatrix} x_{1,1} & x_{1,2} & \cdots & x_{1,7} & x_{1,8} \\ x_{2,1} & x_{2,2} & \cdots & x_{2,7} & x_{2,8} \\ \vdots & \vdots & \ddots & \vdots & \vdots \\ \vdots & \vdots & \cdots & \vdots & \vdots \\ x_{46400,1} & x_{46400,2} & \cdots & x_{46400,7} & x_{46400,8} \end{bmatrix},$$

Anschließend wird in Schritt 5 aus dem vorhandelten Soll-Messdaten ein messdatenbasiertes, lineares Modell M für den Zielkanal generiert, womit die Offline Phase 6 abgeschlossen ist.

In der nachfolgenden Online Phase 12 werden kontinuierlich und in Echtzeit Ist-Messwerte von 8 Kanälen ($x_{1IST}...x_{8IST}$) im laufenden Betrieb des Walzgerüsts aufgenommen (Schritt 7). In Schritt 8 wird aus den 7 Kanälen von Ist-Messwerten, die nicht mit dem Zielkanal korrespondieren (d.h. die Kanäle 1 bis 7), ein Soll-Wert $x_{8Soll}$ für den Zielkanal unter Zuhilfenahme des Modells M berechnet. Im darauffolgenden Schritt 9 wird das Residuum r als $r = x_{8Soll} - x_{8Ist}$ berechnet. Aus dem so berechneten Residuum werden anschließend im Zuge einer Nachbehandlung des Residuums (Schritt 10) Ausreißer entfernt und ein Mittelwert in Form einer fensterbasierten Mittelwertberechnung (engl. *sliding average*) berechnet, sodass die Zuverlässigkeit der Vorhersage eines Tausches bzw. einer Wiederherstellung (Schritt 11) der Walze wesentlich erhöht wird. Anschließend wird das nachbehandelte Residuum mit einem Schwellenwert S verglichen, wobei wenn gilt *r > S* eine Wiederherstellung oder einen Tausch der Walze, beispielsweise durch einen entsprechende Meldung auf einer als Display ausgeführten Mensch-Maschine-Schnittstelle, initiiert wird; andernfalls wird die Online Phase 12 fortgeführt.

In Fig. 2 ist das Walzgerüst 14 zum Walzen eines Bandes 15 aus Stahl in einer symbolischen Darstellung gezeigt. Das Band 15 wird in einer, durch einen Pfeil symbolisierten, Richtung durch Gießspalt, der durch die beiden Arbeitswalzen 17 gebildet wird, geführt, wobei eine die plastische Verformung des Bands 15 bewirkende Walzkraft durch die Arbeitswalzen 17 aufgebracht wird. Die Arbeitswalzen 17 werden mittels der Stützwalzen 16 gegen das Band 15 angestellt, wobei die Anstellkraft durch jeweils einen, auf der oberen und unteren Seite des Bands 15 angeordneten, Anstellzylinder 18 bewirkt wird.

In Fig. 3 ist der Ablauf der Online Phase nochmals symbolisiert dargestellt. Aus dem Walzgerüst 14 werden 8 Kanäle von Ist-Messdaten 20 ($x_{1IST}$ bis $x_{8IST}$) laufend aufgenommen, wobei die Kanäle 1 bis 7, d.h. die Ist-Messdaten $x_{1Ist}$ bis $x_{7Ist}$ dem Modell 19 zugeführt werden, welches den simulierten Soll-Wert $x_{8Soll}$ berechnet. Das Residuum r, welches durch den Vergleich von $X_{8Soll}$ mit $x8_{Ist}$ gebildet wird, wird als Basis für die Entscheidung 11 über einen Tausch bzw. eine Wiederherstellung 13 der Walze verwendet.

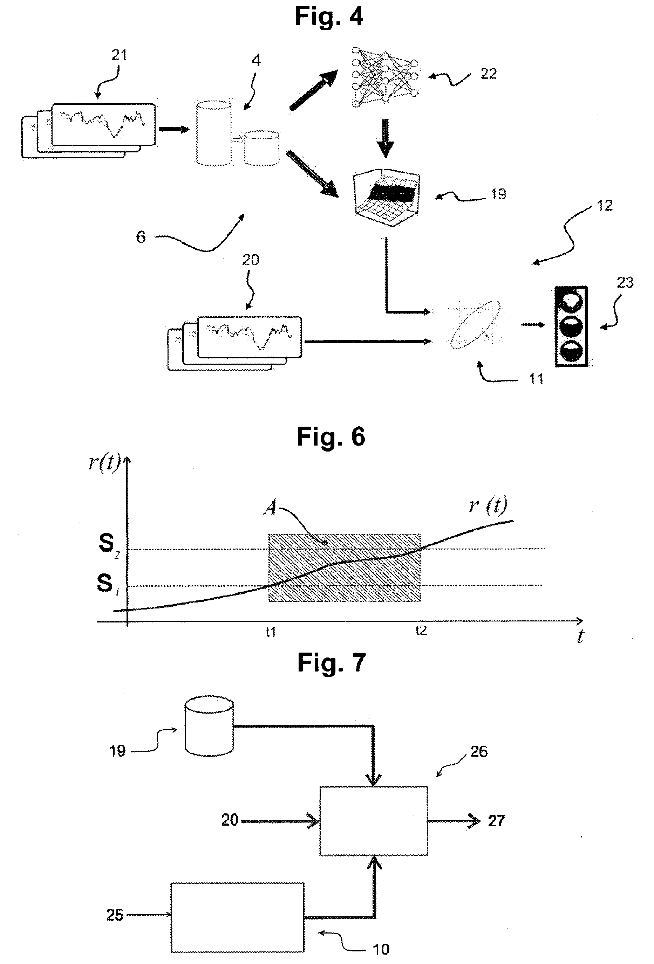

In Fig. 4 ist der Zusammenhang zwischen der Offline Phase 6 und der Online Phase 12 bei der Überwachung einer Walze dargestellt. In der Offline Phase werden mindestens zwei Kanäle von Soll-Messdaten 21 für den Referenzzustand der Anlage aufgenommen. Nach einer nicht dargestellten Definition eines Zielkanals, wird eine Vorbehandlung der Soll-Messdaten 4 durchgeführt. Anschließend wird nach einer Strukturanalyse 22, ein, auf den vorbehandelten Soll-Messdaten und dem Ergebnis der Strukturanalyse basierendes, Modell 19 gebildet. In der Online Phase 12 werden laufend Ist-Messwerte 20 von der Anlage eingelesen, welche - nach einer nicht dargestellten Berechnung eines Soll-Werts für den Zielkanal und einer Ermittlung eine Residuums, der Entscheidung über eine Wiederherstellung oder einen Tausch der Walze 11 zugrundegelegt wird. Das Ergebnis der Entscheidung wird auf einem Anzeigemodul 23 dargestellt.

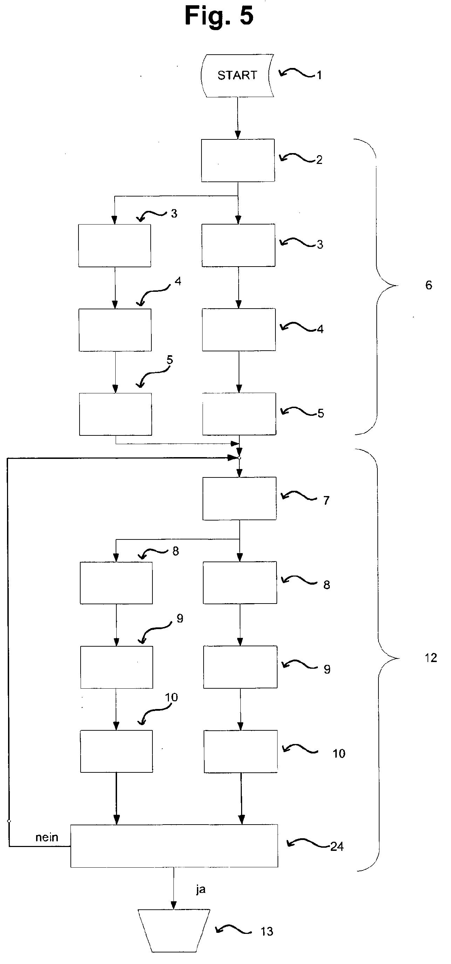

In Fig. 5 ist ein Flussdiagramm mit Verfahrensschritten zur Überwachung einer Walze mit zwei Zielkanälen (die Walzkraft und die Winkelgeschwindigkeit der unteren Arbeitswalze) symbolisch dargestellt. Der Unterschied zu Fig. 1. besteht darin, dass in der Offline Phase 6 die Schritte 3 (Definition je eines Zielkanals, nämlich der Walzkraft und der Winkelgeschwindigkeit der unteren Arbeitswalze), 4 (Vorbehandlung der Messdaten pro Zielkanal), und 5 (Bildung je eines Modells pro Zielkanal) für die beiden Zielkanäle durchgeführt werden. Außerdem werden in der Online Phase 12 die Schritte 8 (Berechnung eines Soll-Werts), 9 (Berechnung eines Residuums) und 10 (Nachbehandlung des jeweiligen Residuums) für beide Zielkanäle durchgeführt. Die beiden Residuen $r_1$ und $r_2$ werden einer Entscheidungslogik 24 zugeführt, welche nach einer Gewichtung der beiden Residuen eine Entscheidung über eine Wiederherstellung bzw. einen Tausch der Walze vornimmt.

In Fig. 6 ist der zeitliche Verlauf eines Residuums r bei der Überwachung einer Walze in einer Anlage zum Walzen von Stahl dargestellt. Nach einer Zeit t1 erreicht das Residuum r den Schwellwert $S_1$, wobei dabei eine Warnung an das Bedienpersonal generiert wird. Durch diese Warnung wird das Bedienpersonal aufgefordert, demnächst einen Wechsel bzw. eine Wiederherstellung der Walze vorzunehmen. Da nur eine Warnung vorliegt, kann z.B. das Walzen eines Coils noch fertig gestellt werden, bevor tatsächlich der Wechsel bzw. die Wiederherstellung der Walze vorgenommen wird. Im Gegensatz zum Schwellwert $S_1$ ist der Schwellwert $S_2$ mit einem Alarm verknüpft, sodass bei fortgesetztem Betrieb der Anlage von einer reduzierten Qualität des Walzguts oder von einer schwerwiegenden Schädigung der Walze ausgegangen werden muss. Das Zeitfenster A gibt somit effektiv ein Zeitintervall für den Wechsel bzw. die Wiederherstellung der Walze an.

In Fig. 7 ist die Bestimmung eines dynamisch veränderlicher Schrankenwerts 27 gezeigt, wobei ein Empfindlichkeitsmaß des Modells 19, die Ist-Messdaten 20 und statistische Kenngrößen des Residuums 10 in einem Schrankenwert Generator 26 bei der Bestimmung des Schrankenwerts 27 mit berücksichtigt werden.

Bezugszeichenliste

1    Start
2    Messdatenerfassung von Soll-Messdaten
3    Definition eines Zielkanals
4    Vorbehandlung der Soll-Messdaten
5    Messdatenbasierte Modellbildung
6    Offline Phase
7    Messdatenerfassung von Ist-Messdaten
8    Berechnung eines Soll-Werts
9    Ermittlung eines Residuums

10 Nachbehandlung des Residuums
11 Entscheidung Wiederherstellung oder Tausch
12 Online Phase
13 Tausch bzw. Wiederherstellung der Walze
14 Walzgerüst
15 Band
16 Stützwalze
17 Arbeitswalze
18 Anstellzylinder
19 Modell
20 Ist-Messdaten
21 Soll-Messdaten
22 Strukturanalyse
23 Anzeigemodul
24 Entscheidungslogik
25 Residuum
26 Schrankenwert Generator
27 Schrankenwert

A   Zeitfenster für Tausch bzw. Wiederherstellung

**Patentansprüche**

**1.** Verfahren zum Überwachen einer Walze in einer Anlage zum Walzen von Metall, aufweisend die Schritte

- Aufnehmen von mindestens zwei Kanälen von Soll-Messdaten im Referenzzustand der Anlage;
- Definieren eines Zielkanals aus den Kanälen der Soll-Messdaten;
- Vorbehandlung der Soll-Messdaten;
- messdatenbasierte Bildung eines Modells für den Zielkanal aus den vorbehandelten Soll-Messdaten;
- Aufnehmen von mindestens zwei Ist-Messwerten im laufenden Betriebszustand der Anlage, worunter sich ein Ist-Messwert für den Zielkanal und ein Ist-Messwert für zumindest einen weiteren Kanal befindet;
- Berechnung eines Soll-Werts für den Zielkanal unter Zuhilfenahme des Modells und unter Berücksichtigung des Ist-Messwerts für zumindest einen weiteren Kanal;
- Ermittlung eines Residuums durch das Vergleichen des Soll-Werts mit dem Ist-Messwert für den Zielkanal;
- Entscheiden über eine Wiederherstellung oder einen Tausch der Walze durch ein Vergleichen der Größe des Residuums mit einem Schrankenwert,

wobei die Soll-Messdaten bei der Vorbehandlung der Messdaten den Schritten

- Detektion und Eliminierung von "Null-Kanälen";
- Detektion und Eliminierung von Ausreißern;
- Filterung;
- Downsampling

unterzogen werden.

**2.** Verfahren nach Anspruch 1, **dadurch gekennzeichnet, dass** nach dem Aufnehmen die Soll-Messdaten abgespeichert werden.

**3.** Verfahren nach einem der Ansprüche 1 bis 2, **dadurch gekennzeichnet, dass** als Zielkanal die Walzkraft der Walze oder eine damit in Verbindung stehende Größe verwendet wird.

**4.** Verfahren nach einem der Ansprüche 1 bis 2, **dadurch gekennzeichnet, dass** als Zielkanal die Winkelgeschwindigkeit der Walze oder eine damit in Verbindung stehende Größe verwendet wird.

**5.** Verfahren nach einem der Ansprüche 1 bis 4, **dadurch gekennzeichnet, dass** die Soll-Messdaten nach dem Downsampling einer Detektion und Eliminierung von stationären Bereichen unterzogen werden.

6. Verfahren nach einem der Ansprüche 1 bis 5, **dadurch gekennzeichnet, dass** die Soll-Messdaten vor der messdatenbasierten Bildung eines Modells einer Strukturanalyse unterzogen werden.

7. Verfahren nach einem der Ansprüche 1 bis 6, **dadurch gekennzeichnet, dass** für den Zielkanal eine messdatenbasierte Bildung mehrerer Modelle aus den vorbehandelten Soll-Messdaten erfolgt.

8. Verfahren nach einem der Ansprüche 1 bis 7, **dadurch gekennzeichnet, dass** das Residuum vor der Entscheidung über die Wiederherstellung oder den Tausch der Walze einer Nachbehandlung des Residuums mit wenigstens einem der Schritte

  - Filterung;
  - Detektion und Eliminierung von Ausreißern;
  - Berechnung statistischer Kenngrößen des Residuums unterzogen wird, wobei der Entscheidung über eine Wiederherstellung oder einen Tausch der Walze das nachbehandelte Residuum zugrundegelegt wird.

9. Verfahren nach Anspruch 8, **dadurch gekennzeichnet, dass** als statistische Kenngrößen entweder der Mittelwert, der Median oder die Standardabweichung oder die Varianz berechnet werden.

10. Verfahren nach einem der Ansprüche 1 bis 9, **dadurch gekennzeichnet, dass** der Schrankenwert entweder fix oder dynamisch veränderlich ist.

11. Verfahren nach einem der Ansprüche 1 bis 10, **dadurch gekennzeichnet,**

  - **dass** mehrere Zielkanäle aus den Kanälen der Soll-Messdaten definiert werden;
  - **dass** je Zielkanal eine messdatenbasierte Bildung eines Modells für den Zielkanal aus den vorbehandelten Soll-Messdaten erfolgt;
  - **dass** je Zielkanal eine Berechnung eines Soll-Werts für den Zielkanal unter Zuhilfenahme des Modells für den Zielkanal und unter Berücksichtigung des Ist-Messwerts für zumindest einen weiteren Kanal erfolgt;
  - **dass** je Zielkanal eine Ermittlung eines Residuums durch das Vergleichen des Soll-Werts mit dem Ist-Messwert für den Zielkanal erfolgt;
  - **dass** zumindest der Vergleich eines Residuums mit einem Schrankenwert der Entscheidung über eine Wiederherstellung oder einen Tausch der Walze zugrundegelegt wird.

12. Verfahren nach Anspruch 11, **dadurch gekennzeichnet, dass** die Residuen vor der Entscheidung über eine Wiederherstellung oder einen Tausch der Walze gewichtet werden.

13. Verwendung des Verfahrens nach einem der Ansprüche 1 bis 12 zur Überwachung einer Arbeits-, Zwischen- oder Stützwalze eines Walzgerüsts zum Kalt- oder Warmwalzen von Eisen-, Stahl- oder Aluminiumwerkstoffen.

**Claims**

1. Method for monitoring a roller in a system for rolling metal, comprising the steps of:

  - receiving at least two channels of target measurement data in the reference state of the system;
  - defining a target channel from the channels of the target measurement data;
  - preprocessing the target measurement data;
  - forming a model based on the measurement data for the target channel from the preprocessed target measurement data;
  - receiving at least two actual measured values in the running operating state of the system, among which there is an actual measured value for the target channel and an actual measured value for at least one further channel;
  - calculating a target value for the target channel using the model and taking into account the actual measured value for at least one further channel;
  - determining a remainder by comparing the target value with the actual measured value for the target channel;
  - deciding whether to restore or replace the roller by comparing the magnitude of the remainder with a limiting value,

the target measurement data undergoing the following steps during the preprocessing of the measurement data

- detection and elimination of "zero channels";
- detection and elimination of outliers;
- filtering;
- downsampling.

2. Method according to Claim 1, **characterized in that**, after being received, the target measurement data are stored.

3. Method according to either of Claims 1 and 2, **characterized in that** the rolling force of the roller or an associated variable is used as the target channel.

4. Method according to either of Claims 1 and 2, **characterized in that** the angular speed of the roller or an associated variable is used as the target channel.

5. Method according to one of Claims 1 to 4, **characterized in that**, after the downsampling, the target measurement data undergo detection and elimination of stationary areas.

6. Method according to one of Claims 1 to 5, **characterized in that** the target measurement data undergo a structural analysis before the formation of a model on the basis of the measurement data.

7. Method according to one of Claims 1 to 6, **characterized in that** the formation of multiple models on the basis of the measurement data from the preprocessed target measurement data is performed for the target channel.

8. Method according to one of Claims 1 to 7, **characterized in that**, before the decision on whether to restore or replace the roller, the remainder undergoes a postprocessing of the remainder involving at least one of the steps of

- filtering;
- detection and elimination of outliers;
- calculation of statistical characteristic values of the remainder, the decision on whether to restore or replace the roller being based on the postprocessed remainder.

9. Method according to Claim 8, **characterized in that** either the mean value, the median or the standard deviation or the variance are calculated as statistical characteristic values.

10. Method according to one of Claims 1 to 9, **characterized in that** the limiting value is either fixed or dynamically variable.

11. Method according to one of Claims 1 to 10, **characterized**

- **in that** multiple target channels are defined from the channels of the target measurement data;
- **in that** a formation of a model for the target channel on the basis of the measurement data from the preprocessed target measurement data is performed for each target channel;
- **in that** a calculation of a target value for the target channel using the model for the target channel and taking into account the actual measured value for at least one further channel is performed for each target channel;
- **in that** a determination of a remainder by comparing the target value with the actual measured value for the target channel is performed for each target channel;
- **in that** at least the comparison of a remainder with a limiting value is based on the decision on whether to restore or replace the roller.

12. Method according to Claim 11, **characterized in that** the remainders are weighted before the decision on whether to restore or replace the roller.

13. Use of the method according to one of Claims 1 to 12 for monitoring a working, intermediate or backing roller of a rolling stand for the cold or hot rolling of iron, steel or aluminium materials.

**Revendications**

1. Procédé de surveillance d'un cylindre dans une installation de laminage de métal, présentant les étapes de

- réception d'au moins deux canaux de données de mesure théoriques dans un état de référence de l'installation ;
- définition d'un canal cible à partir des canaux des données de mesure théoriques ;
- prétraitement des données de mesure théoriques ;
- formation sur la base des données de mesure d'un modèle pour le canal cible à partir des données de mesure théoriques prétraitées ;
- réception d'au moins deux valeurs de mesure réelles dans l'état de fonctionnement en cours de l'installation, moyennant quoi il se trouve une valeur de mesure réelle pour le canal cible et une valeur de mesure réelle pour au moins un autre canal ;
- calcul d'une valeur théorique pour le canal cible sur la base du modèle et en prenant en compte la valeur de mesure réelle pour au moins un autre canal ;
- détermination d'un résidu par le biais de la comparaison de la valeur théorique avec la valeur de mesure réelle pour le canal cible ;
- décision relative à une reproduction ou à un échange des rouleaux par le biais d'une comparaison de la taille du résidu avec une valeur seuil,

dans lequel les données de mesure théoriques lors d'un prétraitement des données de mesure sont soumises aux étapes de

- détection et élimination des « canaux zéro » ;
- détection et élimination des valeurs aberrantes ;
- filtrage ;
- sous-échantillonnage.

**2.** Procédé selon la revendication 1, **caractérisé en ce qu'**après la réception les données de mesure théoriques sont mémorisées.

**3.** Procédé selon l'une des revendications 1 à 2, **caractérisé en ce qu'**en tant que canal cible la force de laminage des rouleaux ou une grandeur en liaison avec celle-ci est utilisée.

**4.** Procédé selon l'une des revendications 1 à 2, **caractérisé en ce qu'**en tant que canal cible la vitesse angulaire des rouleaux ou une grandeur en liaison avec celle-ci est utilisée.

**5.** Procédé selon l'une des revendications 1 à 4, **caractérisé en ce que** les données de mesure théoriques après le sous-échantillonnage sont soumises à une détection et à une élimination de domaines fixes.

**6.** Procédé selon l'une des revendications 1 à 5, **caractérisé en ce que** les données de mesure théoriques préalablement à la formation sur la base des données de mesure d'un modèle sont soumises à une analyse de structure.

**7.** Procédé selon l'une des revendications 1 à 6, **caractérisé en ce que** pour le canal cible une formation sur la base des données de mesure de plusieurs modèles se produit à partir des données de mesure théoriques prétraitées.

**8.** Procédé selon l'une des revendications 1 à 7, **caractérisé en ce que** le résidu préalablement à la décision relative à la reproduction ou à l'échange des rouleaux d'un traitement ultérieur du résidu est soumis à au moins l'une des étapes de

- filtrage ;
- détection et élimination des valeurs aberrantes ;
- calcul de grandeurs caractéristiques statistiques du résidu, le résidu ayant subi un traitement ultérieur servant de base à la décision relative à une reproduction ou à un échange des rouleaux.

**9.** Procédé selon la revendication 8, **caractérisé en ce qu'**en tant que grandeurs caractéristiques statistiques la valeur moyenne, la médiane ou l'écart-type ou la variance sont calculés.

**10.** Procédé selon l'une des revendications 1 à 9, **caractérisé en ce que** la valeur seuil est modifiable soit de manière fixe soit de manière dynamique.

**11.** Procédé selon l'une des revendications 1 à 10, **caractérisé en ce**

- **que** plusieurs canaux cibles sont définis à partir des canaux des données de mesure théoriques ;
- **que** selon le canal cible une formation sur la base des données de mesure d'un modèle pour le canal cible se produit à partir des données de mesure théoriques prétraitées ;
- **que** selon le canal cible un calcul d'une valeur théorique pour le canal cible se produit sur la base du modèle pour le canal cible et en prenant en compte la valeur de mesure réelle pour au moins un autre canal ;
- **que** selon le canal cible une détermination d'un résidu se produit par le biais de la comparaison de la valeur théorique avec la valeur de mesure réelle pour le canal cible ;
- **qu'**au moins la comparaison d'un résidu avec une valeur seuil sert de base à la décision relative à une reproduction ou à un échange des rouleaux.

12. Procédé selon la revendication 11, **caractérisé en ce que** les résidus sont évalués préalablement à la décision relative à une reproduction ou à un échange des rouleaux.

13. Utilisation du procédé selon l'une des revendications 1 à 12 pour la surveillance d'un rouleau de travail, intermédiaire ou d'appui d'une cage de laminoir pour le laminage à froid ou à chaud de matériaux en fer, en acier ou en aluminium.

# Fig. 1

# Fig. 2

# Fig. 3

# Fig. 4

# Fig. 6

# Fig. 7

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02086726 A1
- WO 2005003874 A
- WO 2008071552 A1
- EP 2009058406 W

**In der Beschreibung aufgeführte Nicht-Patentliteratur**

- **H. EFENDIC et al.** Iterative Multi-Step Diagnosis Process for Engine Systems. *SAE world congress 2005,* 11. April 2005
- **SCHREMS et al.** Data based multivariate pseudo correlation analysis in steel industry for optimized variable selection. *Proceedings of the 17th World Congress of the International Federation of Automatic Control,* 06. Juli 2008